# EUROPEAN PATENT APPLICATION

(11) **EP 0 798 623 A1**
(43) Date of publication of application: **01.10.1997**
(21) Application number: 97302165.2
(22) Date of filing: 27.03.1997
(51) Int. Cl.: G06F 1/18

(54) **Personal computer**

(30) Priority: 29.03.1996 JP 76255/96
(71) Applicant: SONY CORPORATION, Tokyo (JP)
(72) Inventor: Goto, Teiyu, Shinagawa-ku, Tokyo (JP)
(74) Representative: Ayers, Martyn Lewis Stanley

(57) **Abstract**

A personal computer comprising an input unit manipulated for inputting a predetermined command, a display unit for displaying a predetermined picture in response to the command, and a main body to which the input unit and the display unit are connected. The main body is so shaped that one of at least two dimensions of the width, height and depth in three directions thereof corresponds to at least one of the three dimensions of a first or mini AV system component, while the other of the above two dimensions corresponds to one of the three dimensions of a second or full AV system component. The width w and the height h of the main body constituting the personal computer are each determined to be 225 mm or 373 mm so as to conform dimensionally to the width and the height of the mini AV system component. Meanwhile the depth d of the main body is determined to be 430 mm so as to conform dimensionally to the width of the full AV system component. Consequently the efficiency of utilizing the occupied space can be enhanced, and a unified appearance is achievable.

## Description

The present invention relates to a personal computer and, more particularly, to a type so contrived as to be usable in feeling like an AV system component.

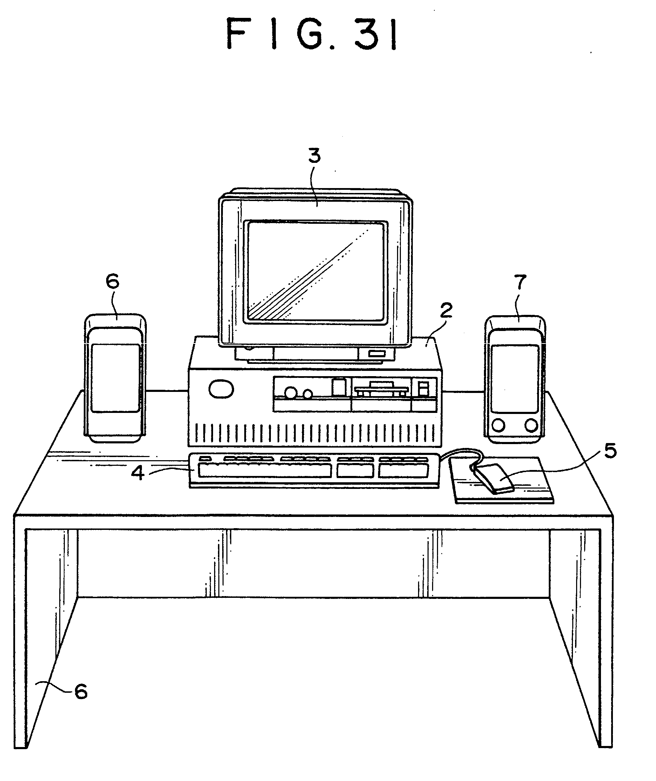

Fig. 31 illustrates an exemplary arrangement of a related art personal computer in the related art. In this example, the personal computer disposed on a desk 1 consists of a main body 2, and a keyboard 4 and a mouse 5 manipulated for inputting predetermined signal to the main body 2. On the main body 2, there is disposed a display unit 3 for displaying a predetermined picture in response to a command from the main body 2. And speaker systems 6 and 7 are disposed on the left and right of the main body 2.

When such a desk-top personal computer is disposed on the desk 1, it occupies a great space to consequently induce requirement of a particular desk for exclusive use.

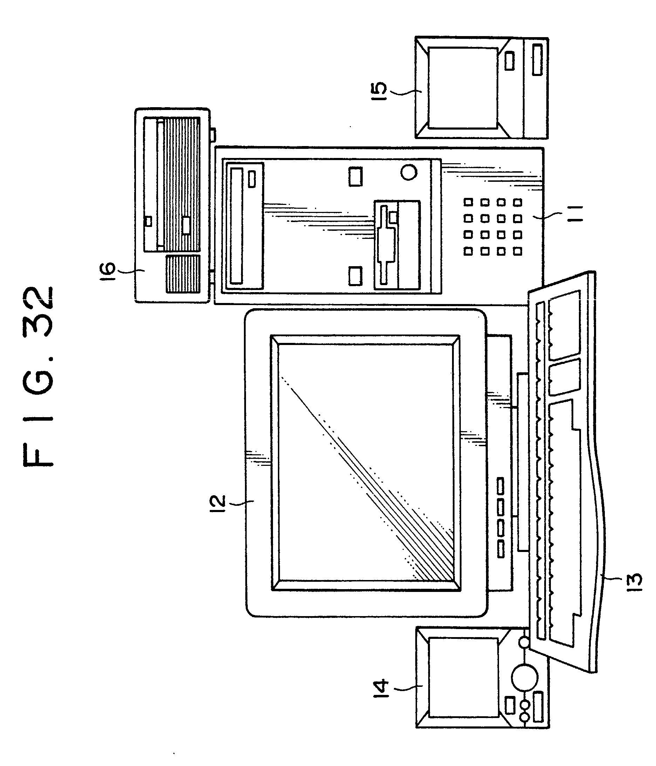

Fig. 32 illustrates an exemplary tower type personal computer. In this example, a display unit 12 and a keyboard 13 are disposed on the left of a tower type main body 11. And a speaker system 14 is disposed on the left of the display unit 12, while another speaker system 15 is disposed on the right of the main body 11. And further a CD-R drive 16 is mounted on the top of the main body 11.

As described, each of the related art personal computers is shaped to have individual dimensions (lengths). Therefore, as shown in Fig. 32, the main body 11 and the CD-R drive 16 do not conform dimensionally to each other particularly in the widths thereof, whereby the CD-R drive 16, when placed on the main body 11, is rendered unstable and fails to be proportional in appearance to eventually seem unnatural.

Furthermore, in addition to the disadvantage that any of such known personal computers does not correspond dimensionally to its peripheral apparatus, there is another problem that, when it is disposed together with AV (audiovisual) system components, the efficiency of utilizing the occupied space is deteriorated since none of dimensional correspondence is existent therebetween, and the appearance is unnatural as well.

The present invention has been accomplished in view of the circumstances mentioned above.

According to an aspect of the present invention, there is provided a personal computer whose main body is so shaped that at least one of its width, height and depth corresponds dimensionally to that of an AV system component. And according to another aspect of the present invention, there is provided a personal computer whose main body is so shaped that at least two of its width, height and depth correspond dimensionally to those of a first AV system component and a second AV system component. Therefore, the efficiency of utilizing the occupied space can be enhanced so consequently realize a satisfactory state of arrangement with a further unified appearance.

In the first-mentioned personal computer of the invention, at least one dimension of the width, height and depth in three directions of its main body is determined to be equal to at least one of the dimensions in three directions of an AV system component.

And in the second-mentioned personal computer of the invention, one of at least two dimensions of the width, height and depth in three directions of the main body is determined to be equal to at least one of the three dimensions of a first AV system component, while the other of the above two dimensions is determined to be equal to at least one of the three dimensions of a second AV system component.

Thus, in the first-mentioned personal computer, at least one of the dimensions in three directions of its main body is so determined as to conform to at least one of the dimensions in three directions of an AV system component.

And further in the second-mentioned computer, one of at least two dimensions of the width, height and depth in three directions of the main body is so determined as to conform to at least one of the three dimensions of a first AV system component, while the other of the above two dimensions is so determined as to conform to one of the three dimensions of a second AV system component.

Thus, there may be provided a personal computer which is dimensionally conformable to any AV system component to thereby enhance the efficiency of utilizing the space occupied in use.

This is particularly useful, since industry standards exist for AV system components such that their outer housings are of one of a number of predetermined sizes. In this way, the personal computer may always fit most efficiently with such AV system components.

The present invention will be more clearly understood from the following description, given by way of example only, with reference to the accompanying drawings in which:
Fig. 1 is a perspective view showing the structure of a main body of a personal computer according to the present invention;
Fig. 2 is a front view showing the structure of the main body of the personal computer according to the invention;
Fig. 3 is a right side view showing the structure of the main body of the personal computer according to the invention;
Fig. 4 is a left side view showing the structure of the main body of the personal computer according to the invention;
Fig. 5 is a rear view showing the structure of the main body of the personal computer according to the invention;
Fig. 6 is a plan view showing the structure of the main body of the personal computer according to the invention;
Fig. 7 is a bottom view showing the structure of the main body of the personal computer according to the invention;
Fig. 8 is a front view showing a structural state where an upper panel of the main body is open in the personal computer of the invention;
Fig. 9 is a perspective view showing a structural state where the upper panel of the main body is open in the personal computer of the invention;
Fig. 10 is a perspective view showing the structure of a display unit in the personal computer of the invention;
Fig. 11 is a front view showing the structure of the display unit in the personal computer of the invention;
Fig. 12 is a right side view showing the structure of the display unit in the personal computer of the invention;
Fig. 13 is a left side view showing the structure of the display unit in the personal computer of the invention;
Fig. 14 is a rear view showing the structure of the display unit in the personal computer of the invention;
Fig. 15 is a plan view showing the structure of the display unit in the personal computer of the invention;
Fig. 16 is a perspective view showing an exemplary state where the display unit is used;
Fig. 17 is a perspective view showing the structure of a keyboard in the personal computer of the invention;
Fig. 18 is a front view showing the structure of the keyboard in the personal computer of the invention;
Fig. 19 is a right side view showing the structure of the keyboard in the personal computer of the invention;
Fig. 20 is a left side view showing the structure of the keyboard in the personal computer of the invention;
Fig. 21 is a plan view showing the structure of the keyboard in the personal computer of the invention;
Fig. 22 is a bottom view showing the structure of the keyboard in the personal computer of the invention;
Fig. 23 is an explanatory diagram illustrating a state where the keyboard is housed in the display unit;
Figs. 24A to 24E are explanatory diagrams illustrating the dimensional relationship between the main body and other peripheral apparatusd;
Fig. 25 is a perspective view showing the structure of a DVD device;
Fig. 26 is a perspective view showing a state where a door of the DVD device is open;
Fig. 27 is a perspective view showing a state where the DVD device is mounted on the main body;
Fig. 28 illustrates a state where the personal computer is disposed in the periphery of a desk;
Fig. 29 illustrates a state where the personal computer is disposed together with mini AV system components;
Fig. 30 illustrates a state where the personal computer is disposed together with full AV system components;
Fig. 31 illustrates a state of disposition of a known related art personal computer; and
Fig. 32 illustrates a state of disposition of another known related art personal computer.

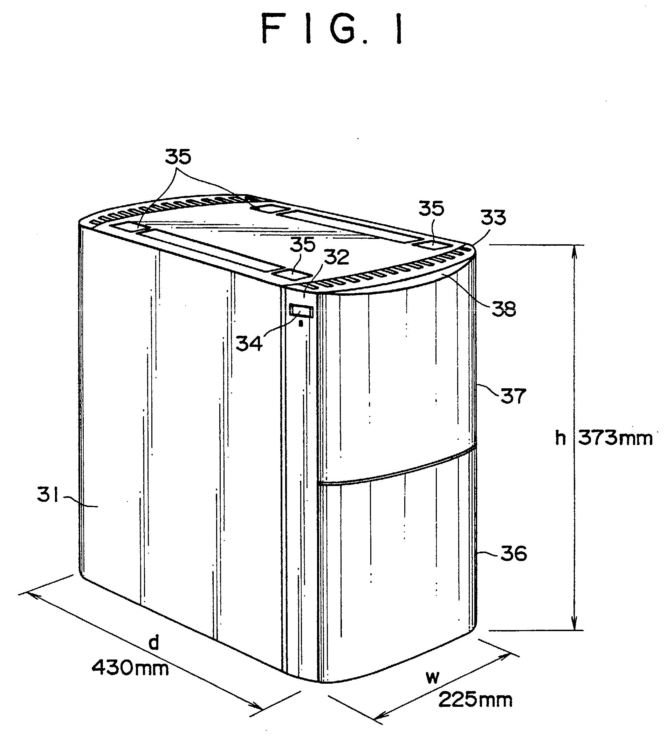

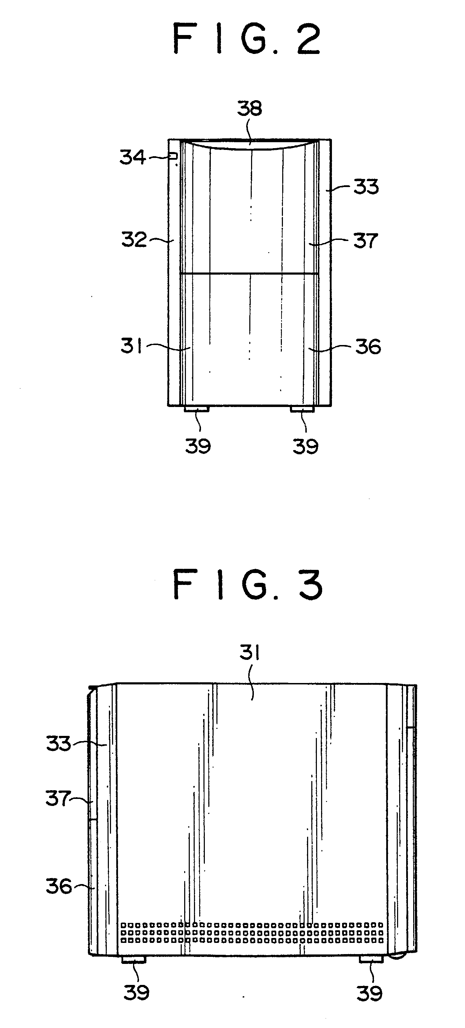

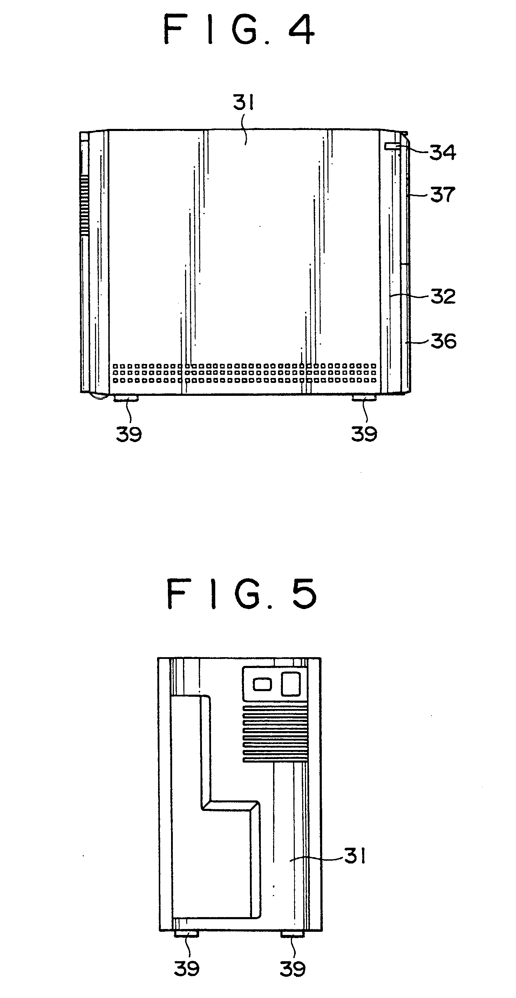

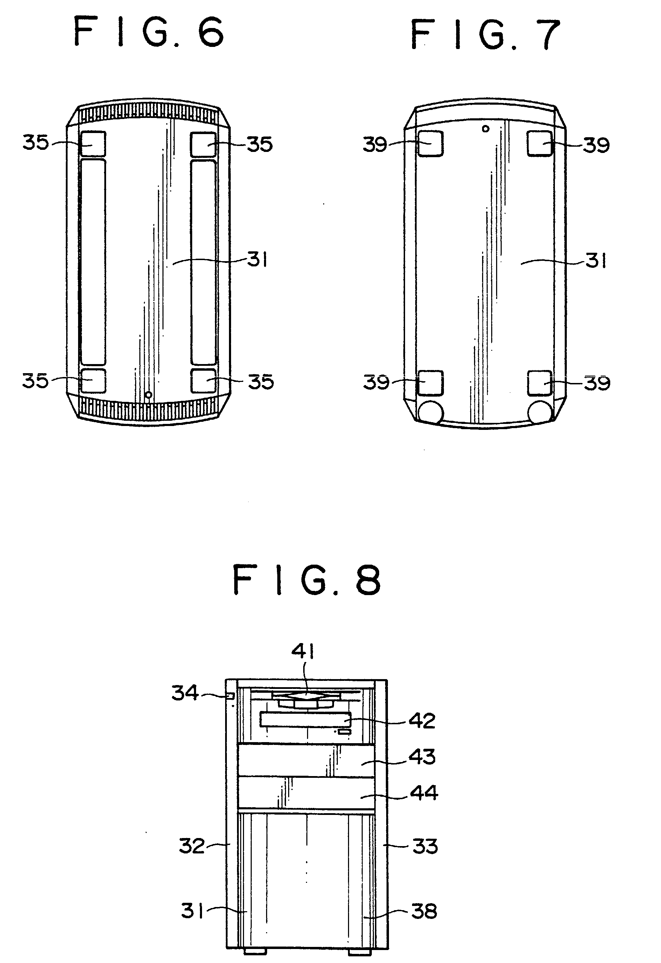

Figs. 1 to 9 represent the structure of a main body in the personal computer of this invention. As shown in these figures, the main body 31 is so shaped as to have a width w of 225 mm, a height h of 373 mm and a depth d of 430 mm. Between a front plane and side planes of the main body 31, there are formed a face 32 (joint face) and a face 33 (joint face) for obliquely joining the front and side planes. And a power switch 34 to be actuated for turning on or off a power supply for the main body 31 is provided in an upper portion of one face 32.

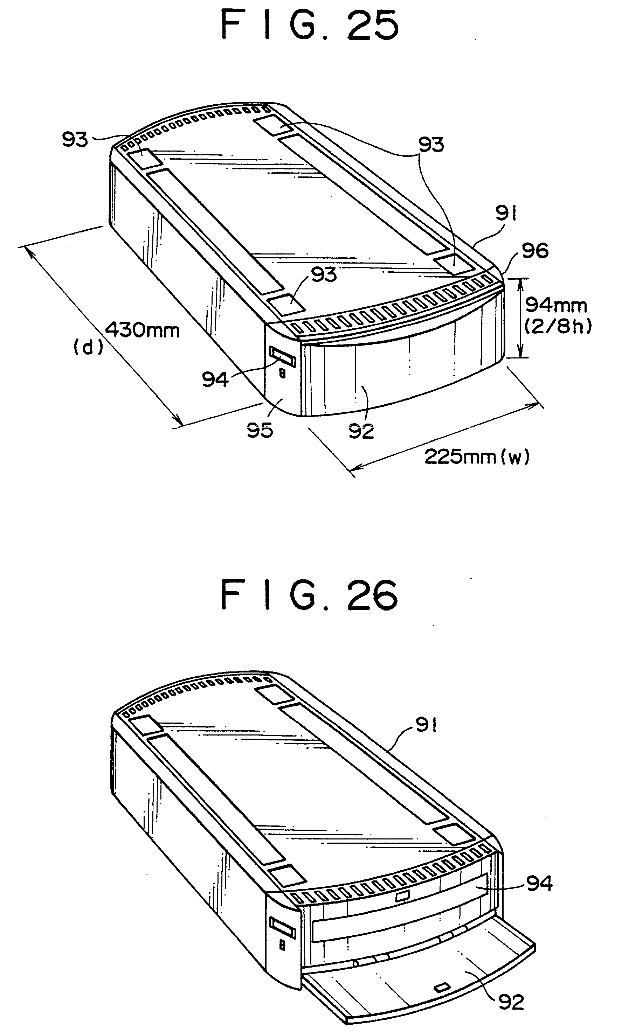

On the top of the main body 31, as will be described later with reference to Figs. 25 to 27, recesses 35 are formed at positions corresponding to legs of a peripheral apparatus so that, when the peripheral apparatus to be connected to the main body 31 is placed thereon, the legs of the peripheral apparatus can be positioned stably on the top of the main body 31.

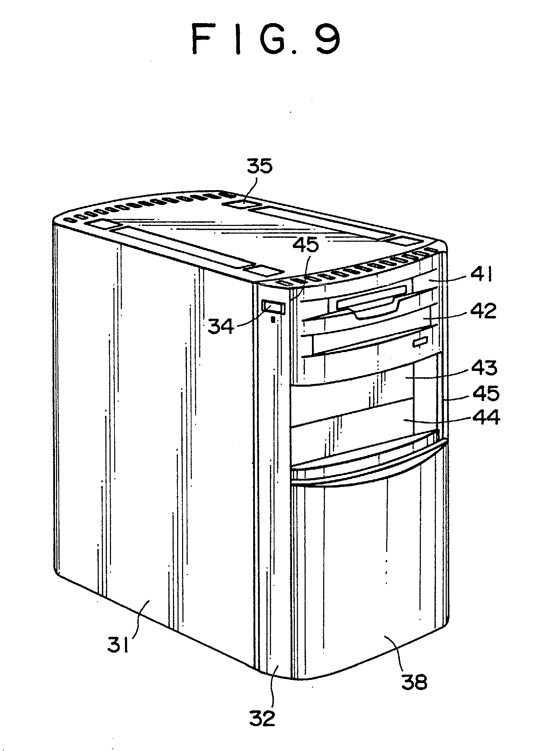

A lower panel 36 and an upper panel 37 are provided on the front plane of the main body 31. The lower panel 36 is kept resiliently urged by means of an unshown spring in a manner to project outward, so that a user can displace the lower panel 36 from its projecting state to a retracted state toward the main body 31 by pressing the lower panel 36 against the resilience of the spring. The upper panel 37 is shiftable vertically while being guided by left and right guides 45 shown in Fig. 9. When the lower panel 36 is in its projecting state, the upper panel 37 is held in the state of Fig. 1 with a downward shift thereof being restricted.

At the time to use the main body 31, the user presses the lower panel 36 toward the main body 31 against the resilience of the spring to thereby displace the lower panel 36 to its retracted state. Then the downward shift of the upper panel 37 is released from the restriction, whereby the upper panel 37 is shifted downward along the guides 45. Consequently, as shown in Fig. 9, an FD (floppy disk) drive 41 and a CD-ROM drive 42 incorporated in the main body 31 are exposed to the outside.

The main body 31 further includes extensions 43 and 44 therein so that other desired devices may be attached as well.

At a halt of the use, the user shifts the upper panel 37 upward while catching with his finger a recess 38 formed at the top of the upper panel 37. Then the upper panel 37 is shifted upward to a predetermined position along the guides 45, and subsequently the lower panel 36 is caused to project outward by the resilience of the spring, hence restricting a downward shift of the upper panel 37.

Legs 39 are provided at the bottom of the main body 31 so as to ensure stable setting on a desk or the like.

For the purpose of achieving a reduced seeming width in appearance, the main body 31 has tapered faces 32 and 33 at the corners of its front plane and side planes. In addition, a slidable panel (upper panel 37) is provided on the front to protect the internal devices. And during no use, the upper panel 37 is closed (as illustrated in Fig. 1) so that the internal devices may not be exposed to eventually realize a flat and simple design image.

Furthermore, in consideration of extendability to any future AV apparatus, the upper panel 37 is so designed as to be changeable as a drawer type or rotary type.

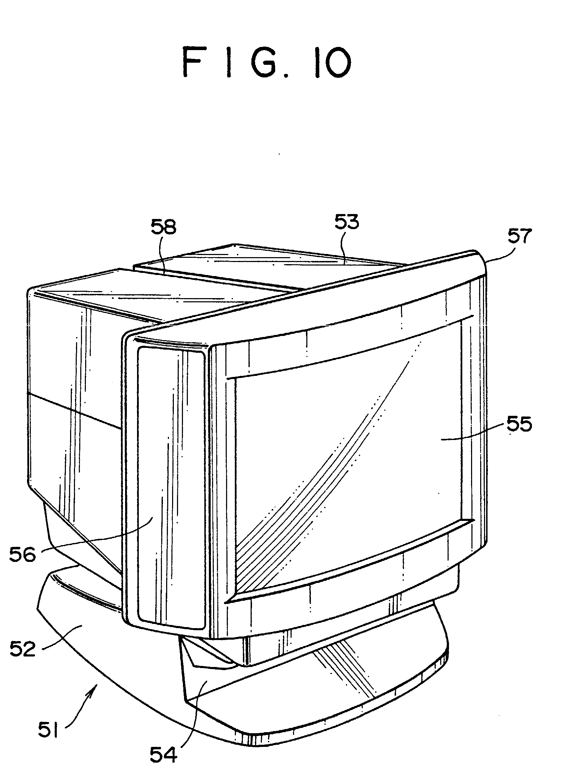

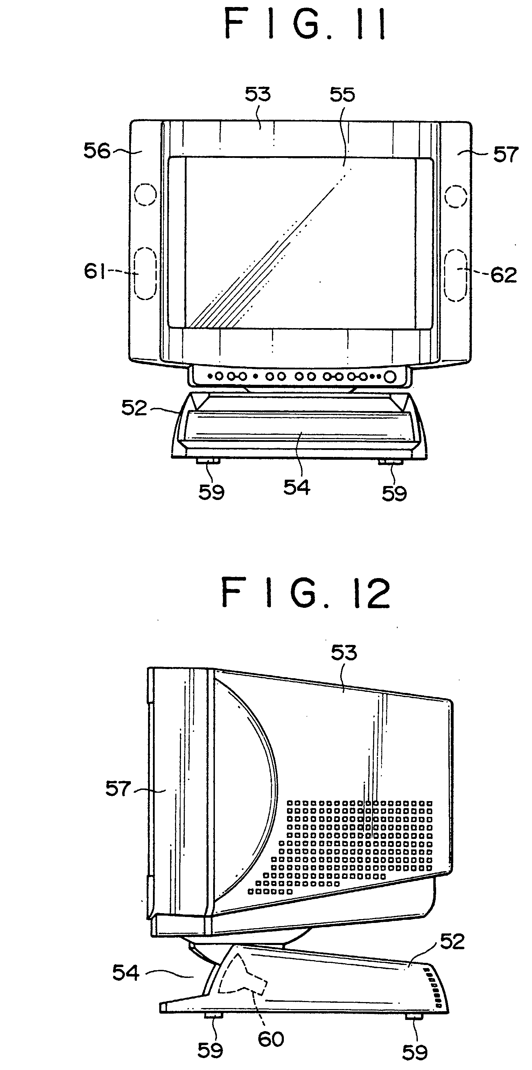

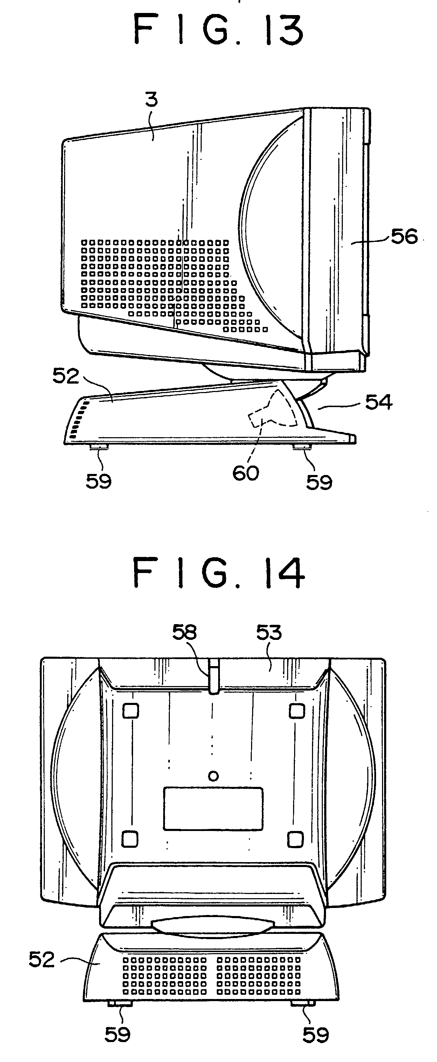

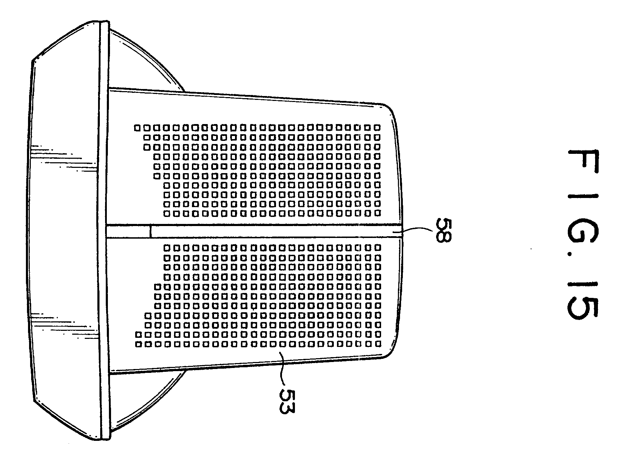

Figs. 10 to 15 represent the structure of a display unit to be connected to the main body 31. As shown in these figures, the display unit 51 fundamentally consists of a pedestal 52 and a display section 53 which is coupled to the pedestal 52 in a manner to be movable both horizontally (in a pan direction) and vertically (in a tilting direction). A recess 54 is formed in the front of the pedestal 52, and a super woofer 60 is housed in the pedestal 52. And legs 59 are attached to the bottom of the pedestal 52.

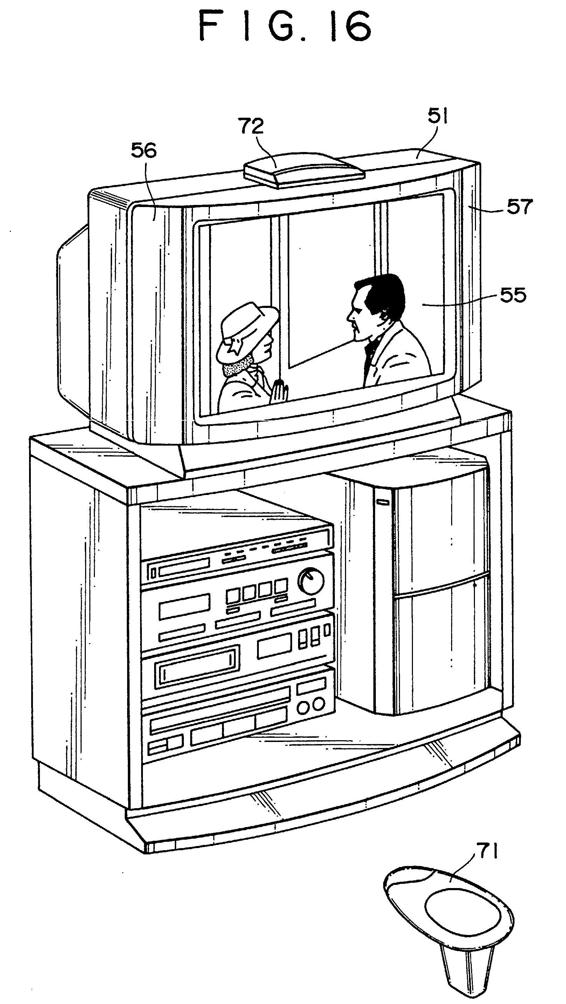

A CRT 55 is disposed in the front of the display section 53, and speakers 61 and 62 are disposed inside the left and right oblique faces 56 and 57 of the CRT 55, respectively. And a groove 58 is formed at the center of the top of the display section 53. This groove 58 is utilizable in such a manner that, when an infrared receiver 72 for example is attached onto the top of the display section 53 to receive infrared light emitted from a remote commander 71, as illustrated in Fig. 16, a connection cord of such infrared receiver 72 can be embedded in the groove 58 to achieve concealed wiring.

When the commander 71 is shifted upward, downward, leftward or rightward, the infrared receiver 72 detects the directional shift and then supplies a detection signal to the main body 31. Subsequently the main body 31 detects the manipulation of the commander 71 from the input detection signal and moves, e.g., a cursor on the CRT 55 in accordance with the direction of such manipulation.

In the groove 58 formed in the display unit 51, there may be embedded, besides the cord of the infrared receiver 72, a cord of, for example, a TV camera constituting a TV telephone, when it is mounted on the display unit 51.

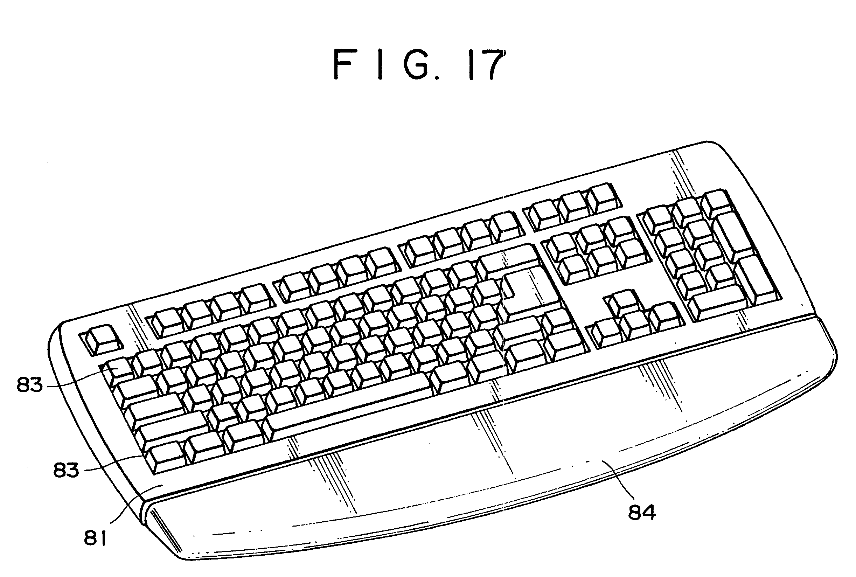

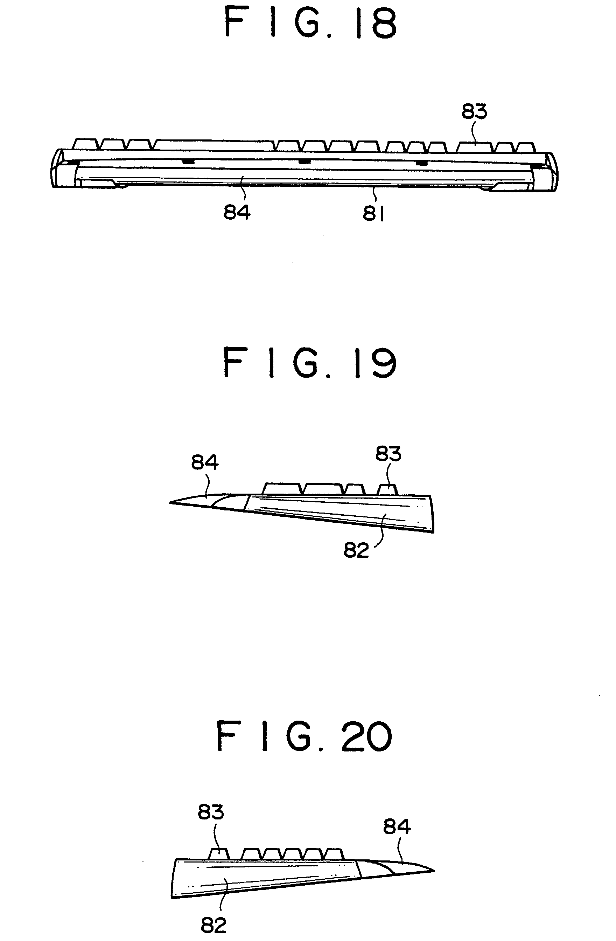

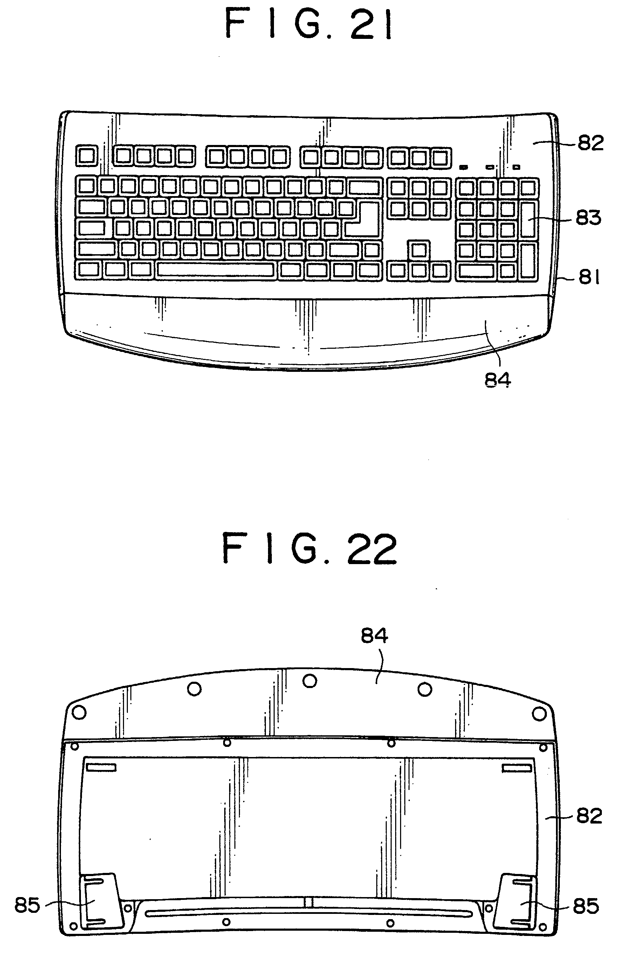

Figs. 17 to 22 represent the structure of a keyboard to be connected to the main body 31. This keyboard 81 consists of a key array 82 where various keys 83 are arrayed, and a tapered portion 84 where the user's hands are rested during manipulation of the keys 83. As illustrated in Fig. 22, stands 85 are provided rotatably at the bottom of the key array 82 so that, when necessary, the keyboard 81 can be used in an inclined state by rotating the stands 85 to positions projecting from the key array 82.

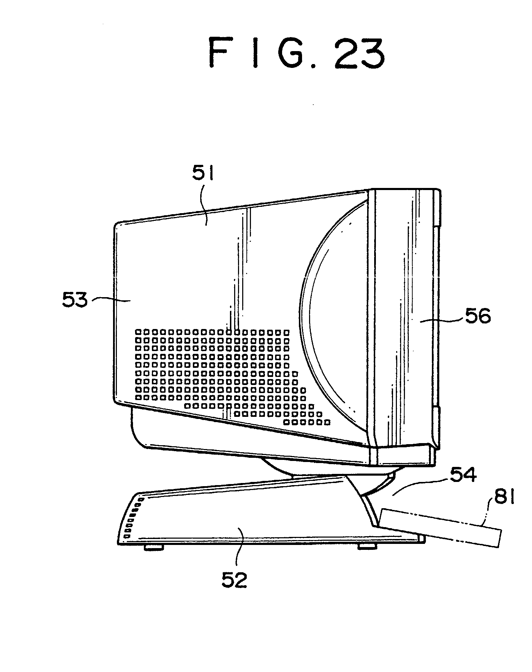

Since the recess 54 is formed in the front of the pedestal 52 of the display unit 51 as described above, it becomes possible to house the keyboard 81 at least partially into the recess 54 in accordance with requirement as illustrated in Fig. 23, hence realizing a further reduction of the odcupied space.

Figs. 24A to 24E represent the dimensional relationship between the main body 31 and peripheral apparatus to be connected to the main body 31. In this embodiment, as described, the main body 31 is so shaped as to have a width w of 225 mm and a height h of 373 mm. Namely, the main body 31 is constructed as a tower type as shown in Fig.24A.

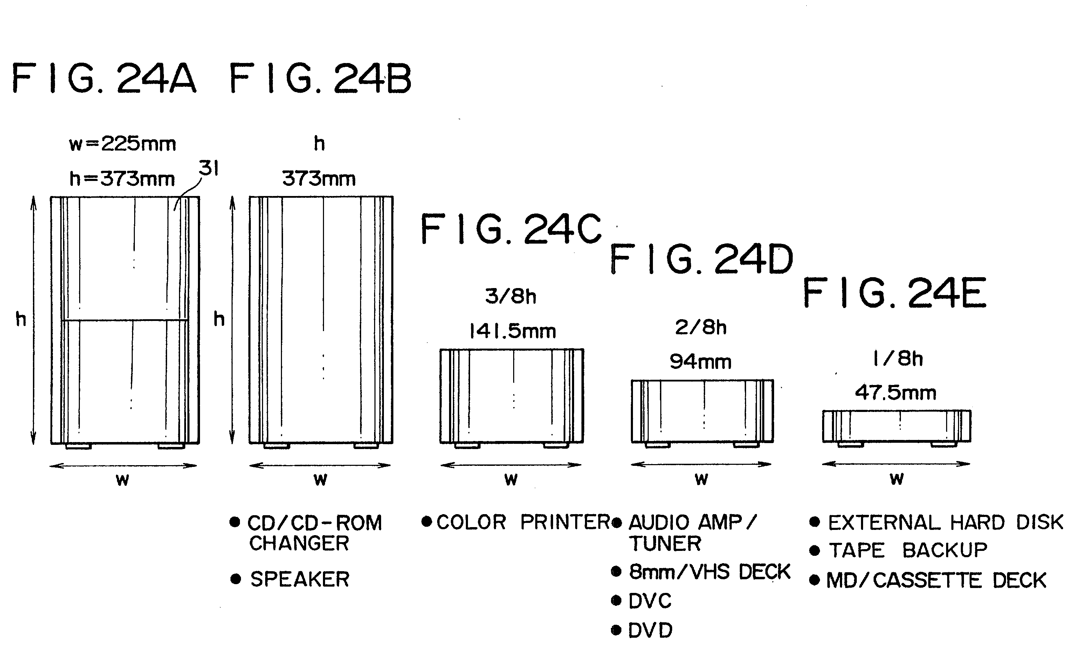

Meanwhile, as shown in Fig. 24B, a speaker system or a CD/CD-ROM changer has a width of 225 mm and a height of 373 mm correspondingly to the main body 31.

A color printer to be connected to the main body 31 is so shaped as to have a width w and a height of 141.5 mm (= 3h/8), as shown in Fig. 24C. An audio amplifier, an audio tuner, an 8mm or VHS video deck, a digital video cassette deck (DVC) or a digital video disk (DVD) device is so shaped as to have a width w and a height of 94 mm
(= 2h/8), as shown in Fig. 24D.

Further, as shown in Fig. 24E, an external hard disk, tape backup device, MD (Mini Disc) device (trade name) or audio cassette deck is so shaped as to have a width w and a height of 47.5 mm (= h/8).

More specifically, in this embodiment, each of the various peripheral apparatus to be connected to the main body 31 is the same in width as the main body 31. And the height thereof is either the same as the height h of the main body 31 (Fig. 24B) or, when such peripheral apparatus are stacked, the total height thereof becomes equal to the height h or its integral submultiple (Figs. 24C to 24E).

Therefore, when such peripheral apparatus are disposed together with the main body 31, a unified appearance is attainable with enhancement in the efficiency of utilizing the occupied space.

Figs. 25 and 26 represent an exemplary structure of a DVD device 91 employed as a peripheral apparatus. This DVD device 91 is so constructed as to have a width of 225 mm, a height of 94 mm and a depth of 430 mm. And faces 95 and 96 (joint faces) are formed between its front plane and two side planes for obliquely joining them. A power switch 94 to be actuated for turning on or off a power supply for the DVD device 91 is disposed in an upper portion of one face 95. Furthermore, recesses 93 are formed in the top of the DVD device 91 so that, when any other peripheral apparatus is mounted on the DVD device 91, its legs may be fitted into the recesses 93 to ensure stable setting of the peripheral apparatus.

A door 92 is attached to the front of the DVD device 91 rotatably so that, when the door 92 is opened as illustrated in Fig. 26, a DVD drive 94 is exposed to the outside.

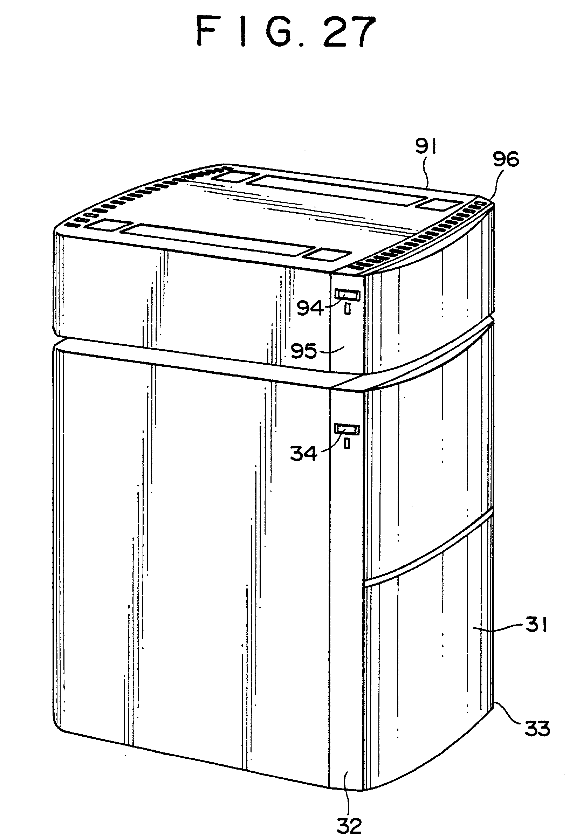

More specifically, the DVD device 91 is constructed in such a manner that its front plane, left and right side planes, rear plane and joint faces 95, 96 conform in shape to the main body 31. Therefore, when the DVD device 91 is mounted on the main body 31 as illustrated in Fig. 27, legs (not shown) of the DVD device 91 are fitted lightly into the recesses 35 formed in the top of the main body 31, whereby the DVD device 91 is stably positioned thereon. Since the respective front, rear and side planes are shaped to be mutually conformable, the main body 31 and the DVD device 91 seem to have a remarkably unified appearance as if constructed integrally. Furthermore, as the respective power switches 34 and 94 are provided at mutually corresponding positions, high operability is achieved as well.

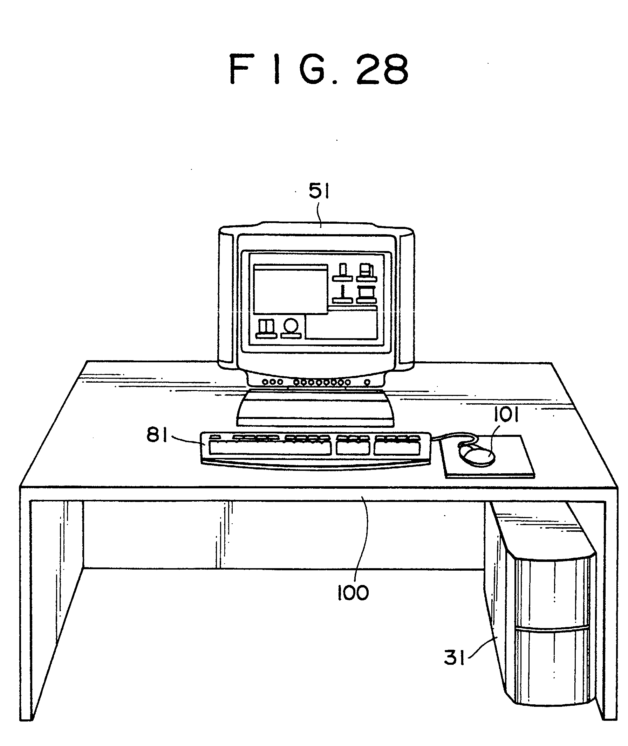

Fig. 28 illustrates an exemplary state where the personal computer having the main body 31, the display unit 51 and the keyboard 81 is disposed in the vicinity of a desk 100. In this embodiment, the main body 31 is positioned under the desk 100, while the display unit 51 and the keyboard 81 are positioned on the desk 100. Also in this embodiment, a mouse 101 is placed on the desk 100. In comparison of Fig. 28 with Fig. 31, it is apparent that the efficiency of utilizing the occupied space on the desk is further enhanced than in the aforementioned related art example of Fig. 31.

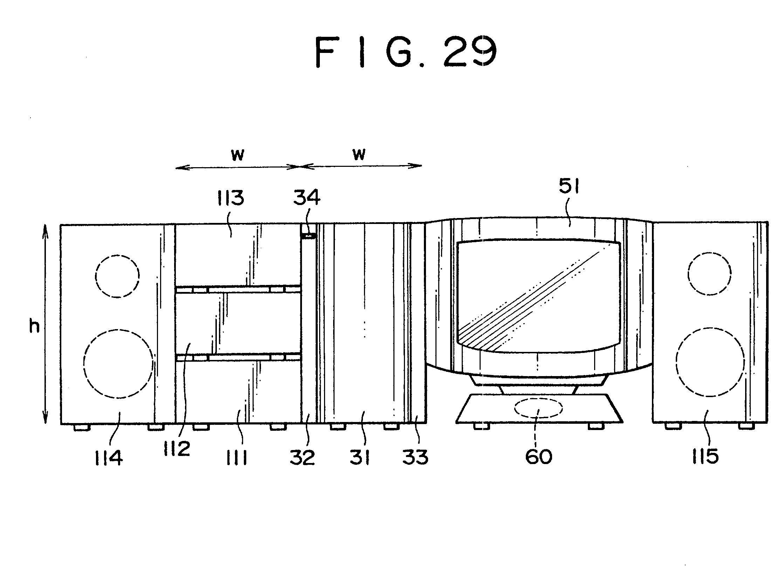

Fig. 29 illustrates an exemplary state where the main body 31 and the display unit 51 are disposed together with mini AV system components. In this case, each of the mini AV system components has a width w of 225 mm, and the total height h thereof is set to 373 mm. Accordingly, as shown in Fig. 29, each of an audio amplifier 111, an audio tuner 112 and an audio cassette deck 113 constituting the mini AV system has a width w equal to the width w of the main body 31. Also each of speaker systems 114 and 115 employed as components of the mini AV system has a height h which is equal to the height h of the main body. Therefore, when these mini AV system components are disposed together with the main body 31, it is possible to attain enhancement in the efficiency of utilizing the occupied space.

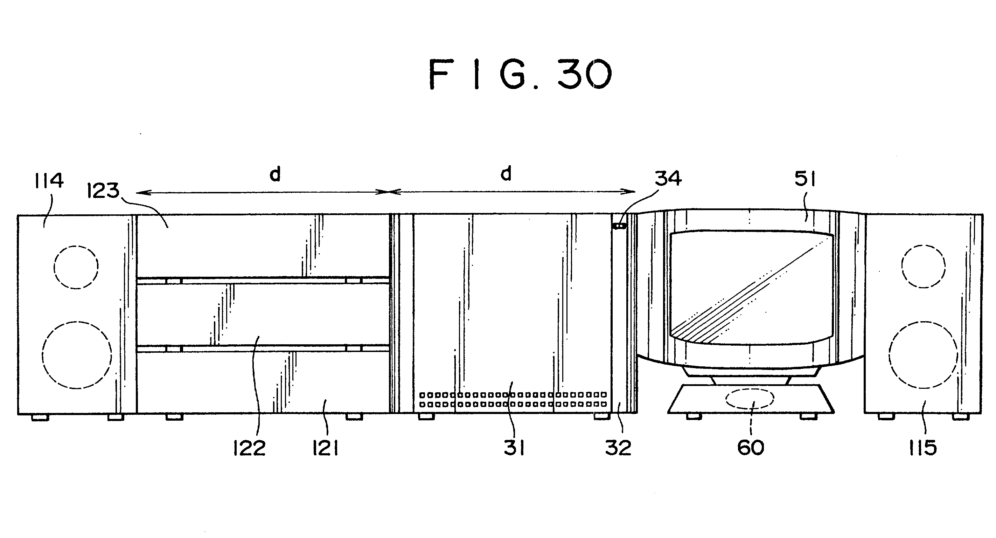

Fig. 30 illustrates another exemplary state where the personal computer of this embodiment is disposed together with components of a full AV system. Each component of this full AV system has a width d of 430 mm which is equal to the depth d of the main body. Therefore, when the main body 31 is disposed together with AV apparatus, which are components constituting the full AV system, in a state where one side of the main body 31 is turned toward the front, a unified appearance is achieved as a whole, and the efficiency of utilizing the occupied space can be enhanced.

If the main body 31 is so disposed that its front is turned forward as illustrated in Fig. 29 or its front is turned rightward while its left side is turned forward as illustrated in Fig. 30, the power switch 34 can be actuated with ease since it is provided at an adequate position actuatable from the front.

Due to such mutual connection of the personal computer and the AV system components, there are attainable some conveniences that a radio or television broadcast received via the Internet for example can be outputted from the display unit 51 and the speaker systems 114, 115, and further its audio data may be supplied to the audio cassette deck 113 or 123 so that the audio signal is recorded on a cassette tape loaded therein. And the recorded audio signal can be reproduced and outputted from the speaker systems 114 and 115.

In this case, when necessary, it is possible to enjoy heavy bass also by emitting the sound from the super woofer 60 housed in the pedestal 52 of the display unit 51.

Although the present invention has been described hereinabove with regard to some exemplary cases where the personal computer is so contrived as to be conformable to mini AV system components and full AV system components, it is further possible to conform the dimensions of the main body to those of any other AV system component as well.

## Claims

1. A personal computer comprising an input unit manipulated for inputting a predetermined command, a display unit for displaying a predetermined picture in response to the command, and a main body to which said input unit and display unit are connected;
wherein said main body is so shaped that at least one of the width, height and depth in three directions thereof corresponds to at least one of the three dimensions of an AV system component.

2. A personal computer according to claim 1, wherein the width of said main body has a dimension corresponding to the width of said AV system component.

3. A personal computer according to claim 2, wherein the width of said main body and that of said AV system component are each determined to be 225 mm.

4. A personal computer according to claim 1, 2 or 3, wherein the depth of said main body has a dimension corresponding to the width of said AV system component.

5. A personal computer according to claim 4, wherein the depth of said main body and the width of said AV system component are each determined to be 430 mm.

6. A personal computer according to any preceding claim, wherein a shift panel is provided on the front of said main body in a manner to be shiftable downward when any internal device in said main body is used.

7. A personal computer according to claim 6, wherein a restriction panel is provided under said shift panel on the front of said main body in a manner to project outward for restricting a downward shift of said shift panel or to be pressed for permitting such a shift.

8. A personal computer according to any preceding claim, wherein joint faces are formed between the front and side planes of said main body for obliquely joining said planes, and a switch to be actuated at the time of using said main body is provided on one of said joint faces.

9. A personal computer according to claim 8, wherein said joint faces conform in shape to joint faces of a peripheral apparatus to be mounted on the top of said main body.

10. A personal computer according to any preceding claim, wherein recesses are formed in the top of said main body at positions corresponding to legs of a peripheral apparatus to be mounted on said main body.

11. A personal computer according to any preceding claim, wherein the width and the depth of said main body have dimensions corresponding respectively to the width and the depth of a peripheral apparatus to be mounted on the top of said main body.

12. A personal computer according to any preceding claim, wherein the height of said main body has a dimension corresponding to the height of a peripheral apparatus to be connected to said main body, or a dimension corresponding to the total height of a plurality of stacked peripheral apparatus.

13. A personal computer comprising an input unit manipulated for inputting a predetermined command, a display unit for displaying a predetermined picture in response to the command, and a main body to which said input unit and display unit are connected;
wherein said main body is so shaped that one of at least two dimensions of the width, height and depth in three directions thereof corresponds to at least one of the three dimensions of a first AV system component, while the other of said two dimensions corresponds to one of the three dimensions of a second AV system component.

14. A personal computer according to claim 13, wherein the remaining one of the width, height and depth in three directions of said main body has a dimension corresponding to one of the remaining two dimensions of said first AV system component.

15. A personal computer according to claim 13 or 14, wherein the width of said main body has a dimension corresponding to the width of said first AV system component, and the depth of said main body has a dimension corresponding to the width of said second AV system component.

16. A personal computer according to claim 15, wherein the height of said main body has a dimension corresponding to the height of said first AV system component.

17. A personal computer according to any one of claims 13 to 16, wherein the width of said main body and the width of said first AV system component are each determined to be 225 mm, and the depth of said main body and the width of said second AV system component are each determined to be 430 mm.

18. A personal computer according to any one of claims 13 to 17, wherein the height of said main body is determined to be 373 mm.

19. A personal computer according to any preceding claim wherein the AV system component or the first and second AV system components are dimensioned according to an industry standard.

20. A personal computer according to any preceding claim in combination with the AV system component or the first and second AV system components.
